# EUROPÄISCHE PATENTSCHRIFT

(11) **EP 3 326 501 B1**
(45) Veröffentlichungstag und Bekanntmachung des Hinweises auf die Patenterteilung: **10.04.2019**
(21) Anmeldenummer: 17197891.9
(22) Anmeldetag: 24.10.2017
(51) Int. Cl.: A47J 31/44

(54) **GETRÄNKEBEREITER**
BEVERAGE MAKER
PRÉPARATEUR DE BOISSONS

(30) Priorität: 23.11.2016 DE 102016122576
(43) Veröffentlichungstag der Anmeldung: 30.05.2018
(73) Patentinhaber: Miele & Cie. KG, 33332 Gütersloh (DE)
(72) Erfinder: Wüstefeld, Michael, 59555 Lippstadt (DE); Eblenkamp, Alfons, 33397 Rietberg (DE)

(56) Entgegenhaltungen:
- DE-A1-102012 200 751
- DE-A1-102015 205 123

## Beschreibung

Die Erfindung betrifft einen Getränkebereiter zur Herstellung unterschiedlicher Getränke mit einem frontseitigen Ausgabebereich, in den ein Getränkeauslauf mündet und in dem ein zum Abstellen eines mit dem Getränk zu befüllenden Gefäßes geeigneter Boden als für eine Reste des Getränkes oder anderer Flüssigkeiten durchlässige Abtropfplatte ausgeführt ist, wobei sich unterhalb der Abtropfplatte eine Tragestruktur befindet, welche die Abtropfplatte abstützt.

Getränkebereiter können beispielsweise Espressomaschinen, Kaffeemaschinen, Kaffeeautomaten, Wasserspender, Teebereiter, Saftzentrifugen oder ähnliche Geräte beziehungsweise Kombinationen aus den genannten Geräten sein. Die DE102012200751A1 zeigt einen derartigen Getränkebereiter.

Um das mit einem Getränk zu befüllende Gefäß abstellen zu können, weisen Getränkebereiter der hier in Rede stehenden Art sogenannte Abtropfplatten auf. Diese Abtropfplatten werden zumeist gitterartig aus Edelstahl, Aluminium oder Kunststoff hergestellt, wobei andere Materialien möglich sind. Eine gitterartige Struktur der Abtropfplatte hat jedoch den Nachteil, dass sie relativ schwierig zur Reinigung zu entnehmen ist.

Nachteilig an den hier beschriebenen Lösungen ist außerdem, dass zur Erleichterung der Entnahme beziehungsweise des Einsetzens der Abtropfplatte die Abtropfplatte oft einen Griff oder eine Grifföffnung aufweist. Diese Öffnung muss ausreichend groß sein, um mit einem Finger hineinzugreifen und damit die Abtropfplatte anzuheben beziehungsweise in die hierfür im Getränkebereiter vorhandene Tragestruktur einsetzen zu können. Die Öffnung schränkt die äußere Gestaltung des Getränkebereiters ein und gibt regelmäßig den Blick in die darunter befindliche Abtropfschale frei, die aufgrund von aufgefangenen Getränke- oder Reinigungsflüssigkeitsresten schnell unansehnlich wirkt.

Der Erfindung liegt somit die Aufgabe zu Grunde, die Handhabung der Abtropfplatte für Wartungszwecke zu verbessern.

Erfindungsgemäß wird unter anderem diese Aufgabe durch einen Getränkebereiter mit den Merkmalen des Patentanspruchs 1 gelöst. Dadurch, dass die Abtropfplatte gegenüber der Tragestruktur verkippbar ausgestaltet ist, kann die Abtropfplatte sehr leicht von der Tragestruktur zur Reinigung entfernt werden. Die Verkippung der Abtropfplatte gegenüber der Tragestruktur ermöglicht die Entnahme der Abtropfplatte von der Tragestruktur ohne dass hierfür ein Griff oder eine Grifföffnung erforderlich ist. Damit wird die Handhabung für die häufig durchzuführende Wartung oder Reinigung stark vereinfacht. Aus diesem Grund kann die Durchlassöffnung für die Reste des Getränkes oder anderer Flüssigkeiten in der Abtropfplatte sehr klein ausgeführt werden. Bei einer Gitterstruktur kann dieses Gitter außerdem sehr feingliederig ausgeführt sein. Die mit der Erfindung erreichbaren Vorteile bestehen darin, dass die lösbar in die Tragestruktur eingesetzte Abtropfplatte mühelos aus ihrer Halterung entnommen und getrennt von dem Getränkebereiter gereinigt werden kann.

Die Reinigung kann im einfachsten Fall in einer Geschirrspülmaschine erfolgen, so dass hierbei jegliche Handarbeit entfällt. Vorteilhafte Ausgestaltungen und Weiterbildungen der Erfindung ergeben sich aus den nachfolgenden Unteransprüchen. Die verkippbare Lagerung der Platte ist dabei mittels einer Hebelstütze bereitgestellt, wobei die Hebelstütze bevorzugt geräteseitig angebracht ist. Alternativ kann die Hebelstütze auch an der Unterseite der Platte angebracht oder angeformt sein. Alle Positions- oder Richtungsangaben für die genannten Ausführungen beziehen sich auf die betriebsgemäße Position des Getränkebereiters..

Gemäß einer vorteilhaften Ausgestaltung der Erfindung ist vorgesehen, dass die Abtropfplatte und die Tragestruktur um eine frontseitig entlang laufende Kippachse gegeneinander verkippbar sind. Die Ausgestaltung der Verkippung mit einer frontseitig entlanglaufenden Kippachse bietet den Vorteil einer sicheren Lagerung der Abtropfplatte in der Tragestruktur und verhindert eine seitliche Verkippung der Abtropfplatte, was zu Fehlbedienungen durch den Nutzer führen könnte.

Eine bevorzugte Ausführung sieht vor, dass die Verkippung der Abtropfplatte gegenüber der Tragestruktur aus einer Normalstellung in eine Kippstellung zur Bildung eines frontseitigen Spaltes zwischen der Abtropfplatte und der Tragestruktur in der Kippstellung führt. Die Bildung eines frontseitigen Spaltes zwischen Abtropfplatte und Tragestruktur erleichtert die Entnahme der Abtropfplatte von der Tragestruktur durch den vor dem Gerät stehenden Benutzer.

Besonders vorteilhaft ist die Weiterbildung, dass der in der Kippstellung gebildete Spalt die Entfernung der Abtropfplatte von der Tragestruktur per Hand durch den Benutzer ermöglicht. Die Entnahme der Abtropfplatte von der Tragestruktur per Hand ist besonders einfach und schnell auszuführen, wenn der gebildete Spalt in der Kippstellung ausreichend Platz bietet die Abtropfplatte sicher zu greifen.

Gemäß der vorliegenden Erfindung weist die Abtropfplatte mindestens eine Erhöhung auf, die zusammen mit der Tragestruktur eine Wippe bildet. Mit der Erhöhung ist eine einfache Maßnahme gegeben die Möglichkeit zur Verkippung der Abtropfplatte gegenüber der Tragestruktur zu gewährleisten. Vorteilhafterweise ist die Erhöhung derart angeordnet, dass ein Großteil der Fläche der Abtropfplatte dennoch geeignet ist ein Gefäß zum Befüllen mit einem Getränk darauf sicher abstellen zu können. Die Lösung bietet den wesentlichen Vorteil, dass auch bereits im Einsatz befindliche Getränkebereiter mit einer derartigen Abtropfplatte nachgerüstet werden können.

Alternativ weist die Tragestruktur mindestens eine Erhöhung auf, die zusammen mit der Abtropfplatte eine Wippe bildet. Mit der Erhöhung ist eine einfache Maßnahme gegeben die Möglichkeit zur Verkippung der Abtropfplatte gegenüber der Tragestruktur zu gewährleisten. Vorteilhafterweise ist die Erhöhung derart angeordnet, dass ein Großteil der Fläche der Abtropfplatte dennoch geeignet ist ein Gefäß zum Befüllen mit einem Getränk darauf sicher abstellen zu können.

Gemäß einer vorteilhaften Ausgestaltung der Erfindung ist vorgesehen, dass zwischen Abtropfplatte und Tragestruktur ein Freiraum gebildet ist, sodass die Abtropfplatte und die Tragestruktur eine Wippe bilden. Der Freiraum zwischen Abtropfplatte und Tragestruktur ist eine einfache Maßnahme, um die Möglichkeit zur Verkippung der Abtropfplatte gegenüber der Tragestruktur zu gewährleisten. Ein solcher Freiraum kann unabhängig von einer Erhöhung an der Abtropfplatte oder Tragestruktur vorgesehen sein. Wird der zusätzliche Freiraum zwischen Tragestruktur und Abtropfplatte zusammen mit einer Erhöhung vorgesehen, erhöht dies den möglichen Winkel, um den sich die Abtropfplatte gegenüber der Tragestruktur wippenartig verkippen lässt.

Eine bevorzugte Ausführung sieht vor, dass auf der Abtropfplatte ein Tastdruckbereich gebildet ist, wobei durch Ausübung von Tastdruck im Tastdruckbereich per Finger oder Hand durch den Benutzer die Verkippung der Abtropfplatte gegenüber der Tragestruktur einleitbar ist. Ein solcher Tastdruckbereich sollte nur einen begrenzten Bereich der Oberfläche der Abtropfplatte ausmachen, um weiterhin gewährleisten zu können, dass Gefäße zum Befüllen mit Getränken sicher auf der Abtropfplatte abgestellt werden können. Andererseits sollte der Tastdruckbereich so groß gewählt werden, dass dieser einfach vom Benutzer gefunden wird und sich leicht betätigen lässt.

Gemäß einer vorteilhaften Ausgestaltung der Erfindung ist vorgesehen, dass der Tastdruckbereich randseitig an der Abtropfplatte angeordnet ist. Die Anordnung des Tastdruckbereichs am Rand der Abtropfplatte bietet den Vorteil eines wirksamen Hebelarms zur Verkippung der Abtropfplatte gegenüber der Tragestruktur. Außerdem hat eine randseitige Anordnung den Vorteil, dass die zentrale Fläche der Abtropfplatte geeignet ist Gefäße zum Befüllen mit Getränken sicher abzustützen.

Eine vorteilhafte Ausführung ist, dass der Tastdruckbereich dem frontseitigen Rand der Abtropflatte von der Kippachse aus gegenüberliegend angeordnet ist. Die Anordnung des Tastdruckbereichs an der dem frontseitigen Rand der Abtropfplatte gegenüber liegenden Seite bietet den Vorteil, dass sich durch Betätigung dieses Tastdruckbereiches ein frontseitig angeordneter Spalt zwischen Abtropfplatte und Tragestruktur bildet. Die frontseitige Anordnung des gebildeten Spaltes erleichtert die Entnahme der Abtropfplatte von der Tragestruktur durch den Benutzer erheblich.

Besonders vorteilhaft ist die Weiterbildung, dass unter dem Tastdruckbereich ein Freiraum zwischen Abtropfplatte und Tragestruktur gebildet ist. Dieser Freiraum bietet eine einfache, aber wirksame Möglichkeit die Verkippung der Abtropfplatte gegenüber der Tragestruktur durch Betätigung des Tastendruckbereiches zu gewährleisten.

Eine bevorzugte Ausführung sieht vor, dass der Tastdruckbereich durch eine Markierung in der Abtropfplatte erkennbar ist. Die Kennzeichnung des Tastdruckbereiches für den Benutzer bietet zum einen den Vorteil, dass dieser einfacher gefunden wird. Zum anderen verhindert die Markierung zusätzlich Fehlbedienungen durch den Benutzer, beispielsweise durch Abstellen von Gefäßen auf dem Tastdruckbereich.

Eine vorteilhafte Ausführungsform der Erfindung sieht vor, dass die Abtropfplatte aus geschirrspülmaschinenfestem Kunststoff besteht. Mit dieser Ausführung ist eine besonders einfache Reinigung der entnommenen Abtropfplatte möglich.

Gemäß einer vorteilhaften Ausgestaltung der Erfindung ist vorgesehen, dass die Abtropfplatte aus Metall besteht. Diese Ausgestaltung bietet zum einen einfache Reinigungsmöglichkeiten, zum anderen ist eine derart ausgestaltete Abtropfplatte sehr stabil und macht einen wertigen Eindruck.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen rein schematisch dargestellt und werden nachfolgend näher beschrieben. Einander entsprechende Gegenstände oder Elemente sind in allen Figuren mit den gleichen Bezugszeichen versehen. Es zeigt
- Fig. 1:: Erfindungsgemäßer Getränkebereiter,
- Fig. 2:: Erfindungsgemäßes Abtropfblech und -schale,
- Fig. 3:: Erfindungsgemäßes Abtropfblech und -schale,
- Fig. 4:: Erfindungsgemäßer Getränkebereiter ohne Abtropfblech.

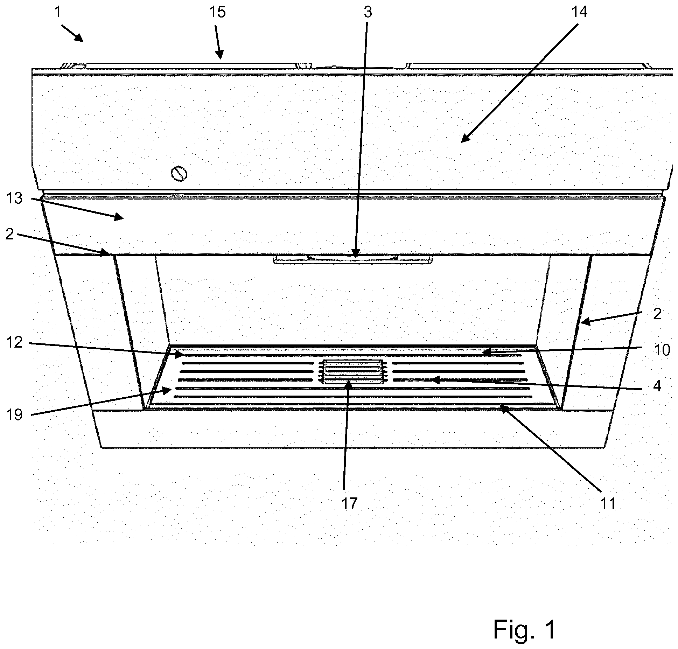

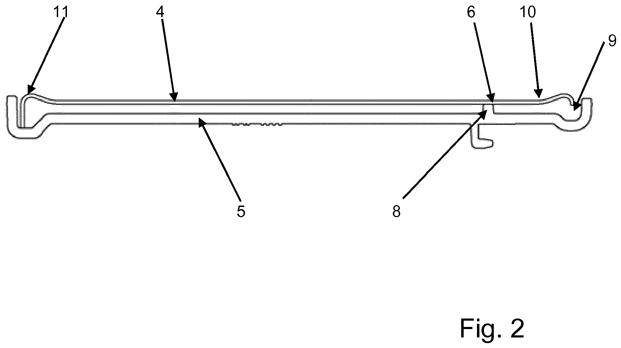

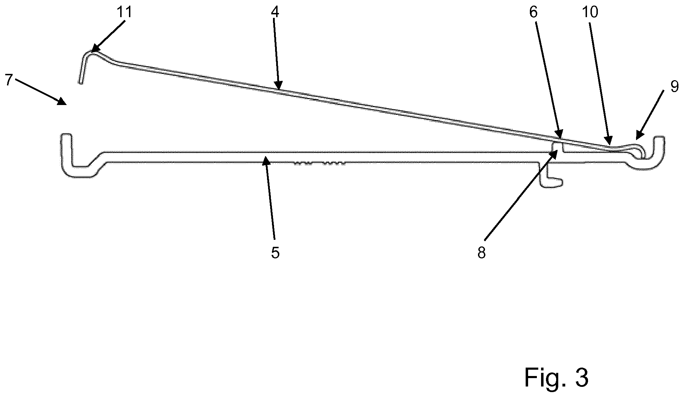

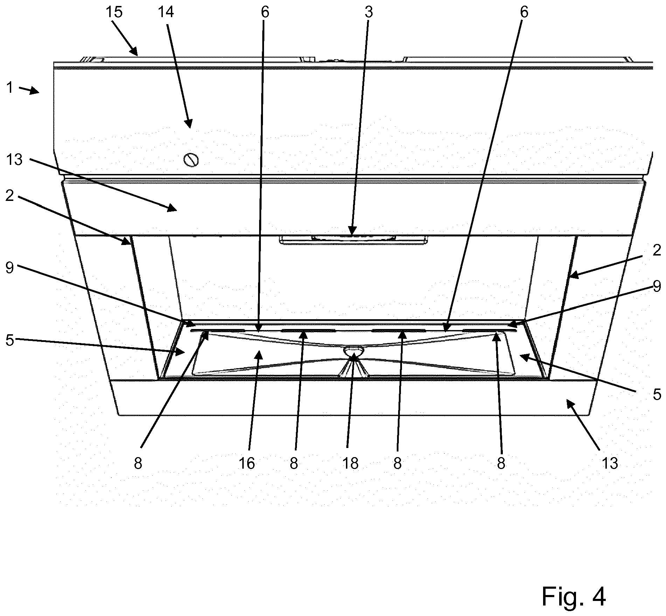

In den Figuren mit dem Bezugszeichen 1 bezeichnet ist ein Getränkebereiter rein schematisch dargestellt. Die Darstellung gemäß Figur 1 zeigt veranschaulicht am Beispiel eines Kaffeeautomaten einen Getränkebereiter 1 in einer Ausführungsvariante als Einbaugerät, wobei hier nur die frontseitige Tür 13 und die Bedienblende 14 des Getränkebereiters 1 dargestellt ist. Die Tür 13 weist geräteseitig, also zur Innenseite 15 der Tür hin, eine Vertiefung, die sogenannte Ausgabenische auf, die als Ausgabebereich 2 dient. Im oberen Teil des Ausgabebereiches 2 befindet sich ein Getränkeauslauf 3, der für die Getränkeabgabe erforderlich ist. Der Getränkeauslauf 3 kann mittels eines hierzu geeigneten Antriebs oder manuell in vertikaler Richtung verschoben werden, so dass dadurch das Getränk unmittelbar in ein unterhalb des Getränkeauslaufs 3 abgestelltes Gefäß abgegeben wird, ohne dass es zu nennenswerten Spritzern kommt. Unterhalb des Getränkeauslaufs 3 weist der Getränkebereiter 1 einen Boden auf, der durch eine Abtropfplatte 4 gebildet ist und zum Abstellen eines mit einem Getränk zu befüllenden Gefäßes dient. Das in der Figur 1 nicht gezeigte Gefäß wird auf dem Boden des Ausgabebereiches 2 auf einer hierzu geeigneten Abtropfplatte 4 abgestellt. Die Abtropfplatte 4 deckt in optisch ansprechender Weise die darunter befindlichen Auffangbehälter und Abtropfschalen 16 (Fig. 4) ab. Unterhalb der Abtropfplatte 4 befindet sich zudem eine Tragestruktur 5 (Fig. 2, 3 ,4), die als Halterung für die Abtropfplatte 4 dient und die Abtropfplatte 4 sicher abstützt. Im Ausführungsbeispiel geht die Tragestruktur 5 (Fig. 2, 3 ,4) in die Abtropfplatte 4 über. Diese beiden Elemente 4, 5 können aber auch durch separate Bauteile realisiert sein. Die Abtropfplatte 4 weist eine gitterartige Struktur 17 unterhalb des Getränkeauslaufs 3 auf, so dass nach Entnahme des Gefäßes noch aus dem Getränkeauslauf 3 abgegebene Getränkereste oder Reinigungsbeziehungsweise Spülflüssigkeiten durch die hierdurch in der Abtropfplatte 4 gebildete Öffnung auf die Abtropfschale 16 (Fig. 4) und anschließend durch die dort gebildete Abflussöffnung 18 (Fig. 4) abgeführt werden. Diese Flüssigkeitsreste können somit in die unter der Abflussöffnung 18 (Fig. 4) vorhandene Auffangschale gelangen, wo sie aufgefangen und gesammelt werden. Die Abtropfplatte 4 ist überwiegend eben ausgeführt und weist insgesamt eine sehr geringe Strukturierung auf, was ihre Reinigungsmöglichkeiten entscheidend verbessert. Im Ausführungsbeispiel weist die Abtropfplatte 4 geradlinig verlaufende Rippen 19 als Strukturierung auf. Die letzte Rippe der Strukturierung 19 dient als Markierung 12 für den dahinter liegenden Tastdruckbereich 10. Betätigt der Benutzer diesen Tastdruckbereich 10 durch Ausübung von Tastdruck mit der Hand oder einem Finger wird die Verkippung der Abtropfplatte 4 gegenüber der Tragestruktur 5 (Fig. 2, 3 ,4) eingeleitet. Durch Einleitung an dem randseitig angeordneten Tastdruckbereich, wird auf der gegenüberliegenden Seite an dem frontseitigen Rand 11 der Abtropfplatte 4 ein Spalt 7 (Fig.3) gebildet. Die frontseitig entlang laufende Kippachse 6 (Fig. 2, 3) führt zu einer Verkippung der Abtropfplatte 4 gegenüber der Tragestruktur 5 aus einer Normalstellung in eine Kippstellung und zur Bildung eines frontseitigen Spaltes 7 (Fig. 3) zwischen der Abtropfplatte 4 und der Tragestruktur 5 (Fig. 2, 3 ,4). Alle Richtungs- und Positionsangaben beziehen sich auf die betriebsgemäße Aufstellposition oder Einbaulage des Getränkebereiters 1.

Die Figur 2 zeigt schematisch eine Schnittdarstellung durch die Abtropfplatte 4 und die Tragestruktur 5 aus Richtung der Kippachse 6. Die Abtropfplatte 4 und die Tragestruktur 5 sind in Figur 2 in Normalstellung gezeigt. Wie gut zu erkennen ist, stützt die Tragestruktur 5 die Abtropfplatte 4 sicher ab, sodass Gefäße zum Befüllen mit Getränken auf der Abtropfplatte 4 sicher abgestellt werden können. Lediglich im rechts der Kippachse 6 angeordneten Tastdruckbereich 10 ist die Abtropfplatte 4 nicht durch die Tragestruktur 5 abgestützt. Mit Hilfe der als Hebelstütze wirkenden Erhöhung 8 an der Tragestruktur 5 ist zwischen der Abtropfplatte 4 und der Tragestruktur 5 eine Wippe gebildet, die eine Verkippung um die Kippachse 6 ermöglicht. Hierzu befindet sich zwischen der Abtropfplatte 4 und der Tragestruktur 5 zudem ein Freiraum 9, der einen ausreichend großen Kippwinkel um die Kippachse 6 gewährleistet.

In Figur 3 sind die Abtropfplatte 4 und die Tragestruktur 5 in einer Schnittdarstellung gemäß Figur 2 in Kippstellung gezeigt. Durch die Verkippung der Abtropfplatte 4 gegenüber der Tragestruktur 5 um die Kippachse 16 ist ein frontseitiger Spalt 7 zwischen der Abtropfplatte 4 und der Tragestruktur 5 gebildet. Dieser Spalt 7 erleichtert die Entfernung der Abtropfplatte 4 von der Tragestruktur 5 durch den Benutzer und verbessert somit die Handhabung des Getränkebereiters 1 erheblich. Wie zu erkennen ist, taucht der Tastdruckbereich 10 der Abtropfplatte 4 in den Freiraum 9 ein, um die Verkippung der Abtropfplatte 4 gegenüber der Tragestruktur 5 zu gewährleisten. Dadurch dass die Abtropfplatte 4 und die Tragestruktur 5 als separate Bauteile ausgeführt sind, lässt sich die Abtropfplatte 4 durch den in der Kippstellung gebildeten Spalt 7 sehr einfach von der Tragestruktur 5 entfernen. Der gebildete Spalt 7 ist vorzugsweise so dimensioniert, dass die Abtropfplatte 4 leicht per Hand von der Tragestruktur 5 entfernt werden kann.

Die Figur 4 zeigt einen Getränkebereiter gemäß Figur 1, wobei die Abtropfplatte 4 (Fig. 1, 2, 3) in der Figur 4 nicht dargestellt ist, um einen Einblick unter die Abtropfplatte 4 (Fig. 1, 2, 3) zu ermöglichen. In dem hier dargestellten Zustand ist die Abtropfplatte 4 (Fig. 1, 2, 3) von dem Getränkebereiter 1 bzw. der Tragestruktur 5 vollständig entfernt. Unter der Abtropfplatte 4 (Fig. 1, 2, 3) befindet sich im vorliegenden Fall eine Abtropfschale 16, in der Flüssigkeiten, wie sie beispielsweise für Reinigungszwecke in einem derartigen Getränkebereiter anfallen, oder Getränkereste aufgefangen und gesammelt werden. Anschließend wird die gesammelte Flüssigkeit durch die Abflussöffnung 18 abgeführt und in einer Auffangschale bis zur Reinigung des Getränkebereiters 1 aufbewahrt. Gut zu erkennen ist, dass die Tragestruktur 5 mehrere Erhöhungen 8 aufweist, die eine Wippe um die frontseitig entlang laufende Kippachse 6 bilden. Die Anordnung mehrerer Erhöhungen 8 in der Tragestruktur 5 erhöht die Stabilität der Abtropfplatte 4 (Fig. 1, 2, 3) durch bessere Abstützung. Andererseits lässt sich die Tragestruktur 5 hierdurch leichter reinigen und Flüssigkeitsreste fließen leichter in die Abtropfschale 16 ab.

Natürlich ist die Erfindung nicht auf die dargestellten Ausführungsbeispiele beschränkt. Weitere Ausgestaltungen sind möglich, ohne den Grundgedanken zu verlassen.

### Bezugszeichenliste:

- 1: Getränkebereiter
- 2: Ausgabebereich
- 3: Getränkeauslauf
- 4: Abtropfplatte
- 5: Tragestruktur
- 6: Kippachse
- 7: Spalt
- 8: Erhöhung, Hebelstütze
- 9: Freiraum
- 10: Tastdruckbereich
- 11: frontseitiger Rand
- 12: Markierung
- 13: frontseitige Tür
- 14: Bedienblende
- 15: Innenseite
- 16: Auffangbehälter, Abtropfschale
- 17: Gitter
- 18: Abflussöffnung
- 19: Rippenstruktur

## Patentansprüche

1. Getränkebereiter (1) zur Herstellung unterschiedlicher Getränke mit einem frontseitigen Ausgabebereich (2), in den ein Getränkeauslauf (3) mündet und in dem ein zum Abstellen eines mit dem Getränk zu befüllenden Gefäßes geeigneter Boden als für eine Reste des Getränkes oder anderer Flüssigkeiten durchlässige Abtropfplatte (4) ausgeführt ist, wobei sich unterhalb der Abtropfplatte (4) eine Tragestruktur (5) befindet, welche die Abtropfplatte (4) abstützt,
**dadurch gekennzeichnet,**
**dass** die Abtropfplatte (4) gegenüber der Tragestruktur (5) verkippbar ausgestaltet ist wobei die Abtropfplatte (4) mindestens eine Erhöhung zur Bereitstellung einer Hebelstütze aufweist, die zusammen mit der Tragestruktur (5) eine Wippe bildet oder die Tragestruktur (5) mindestens eine Erhöhung (8) zur Bereitstellung einer Hebelstütze aufweist, die zusammen mit der Abtropfplatte (4) eine Wippe bildet.

2. Getränkebereiter (1) nach Anspruch 1, **dadurch gekennzeichnet, dass** die Abtropfplatte (4) und die Tragestruktur (5) um eine frontseitig entlang laufende Kippachse (6) gegeneinander verkippbar sind.

3. Getränkebereiter (1) nach Anspruch 1 oder 2, **dadurch gekennzeichnet, dass** die Verkippung der Abtropfplatte (4) gegenüber der Tragestruktur (5) aus einer Normalstellung in eine Kippstellung zur Bildung eines frontseitigen Spaltes (7) zwischen der Abtropfplatte (4) und der Tragestruktur (5) in der Kippstellung führt.

4. Getränkebereiter (1) nach Anspruch 3, **dadurch gekennzeichnet, dass** der in der Kippstellung gebildete Spalt (7) die Entfernung der Abtropfplatte (4) von der Tragestruktur (5) per Hand durch den Benutzer ermöglicht.

5. Getränkebereiter (1) nach einem der Ansprüche 1 bis 4, **dadurch gekennzeichnet, dass** zwischen Abtropfplatte (4) und Tragestruktur (5) ein Freiraum (9) gebildet ist, sodass die Abtropfplatte (4) und die Tragestruktur (5) eine Wippe bilden.

6. Getränkebereiter (1) nach einem der Ansprüche 1 bis 5, **dadurch gekennzeichnet, dass** auf der Abtropfplatte (4) ein Tastdruckbereich (10) gebildet ist, wobei durch Ausübung von Tastdruck im Tastdruckbereich (10) durch den Benutzer die Verkippung der Abtropfplatte (4) gegenüber der Tragestruktur (5) einleitbar ist.

7. Getränkebereiter (1) nach Anspruch 6, **dadurch gekennzeichnet, dass** der Tastdruckbereich (10) randseitig an der Abtropfplatte (4) angeordnet ist.

8. Getränkebereiter (1) nach Anspruch 6 oder 7, **dadurch gekennzeichnet, dass** der Tastdruckbereich (10) dem frontseitigen Rand (11) der Abtropflatte (4) gegenüberliegend angeordnet ist.

9. Getränkebereiter (1) nach einem der Ansprüche 6 bis 8, **dadurch gekennzeichnet, dass** unter dem Tastdruckbereich (10) ein Freiraum (9) zwischen Abtropfplatte (4) und Tragestruktur (5) gebildet ist.

10. Getränkebereiter (1) nach einem der Ansprüche 6 bis 9, **dadurch gekennzeichnet, dass** der Tastdruckbereich (10) durch eine Markierung (12) in der Abtropfplatte (4) erkennbar ist.

11. Getränkebereiter (1) nach einem der Ansprüche 1 bis 10, **dadurch gekennzeichnet, dass** die Abtropfplatte (5) aus geschirrspülmaschinenfestem Kunststoff besteht.

12. Getränkebereiter (1) nach einem der Ansprüche 1 bis 10, **dadurch gekennzeichnet, dass** die Abtropfplatte (5) aus Metall besteht.

## Claims

1. Beverage preparation means (1) for producing various beverages, comprising a dispensing region (2) at the front, into which region a beverage outlet (3) discharges and in which region a base which is suitable for placing a vessel to be filled with the beverage is configured as a drip plate (4) which allows residue of the beverage or other liquids to pass through, a support structure (5), which supports the drip plate (4), being located below the drip plate (4), **characterised in that** the drip plate (4) is designed so as to be tiltable with respect to the support structure (5), the drip plate (4) comprising at least one raised region in order to provide a fulcrum which, together with the support structure (5), forms a rocker, or the support structure (5) comprising at least one raised region (8) in order to provide a fulcrum which, together with the drip plate (4), forms a rocker.

2. Beverage preparation means (1) according to claim 1, **characterised in that** the drip plate (4) and the support structure (5) can be tilted counter to one another about a tilt axis (6) extending along the front.

3. Beverage preparation means (1) according to either claim 1 or claim 2, **characterised in that** tilting the drip plate (4) with respect to the support structure (5) from a normal position into a tilted position leads to the formation of a gap (7) at the front between the drip plate (4) and the support structure (5) in the tilted position.

4. Beverage preparation means (1) according to claim 3, **characterised in that** the gap (7) formed in the tilted position allows the drip tray (4) to be manually removed from the support structure (5) by the user.

5. Beverage preparation means (1) according to any of claims 1 to 4, **characterised in that** a clearance (9) is formed between the drip plate (4) and the support structure (5) such that the drip plate (4) and the support structure (5) form a rocker.

6. Beverage preparation means (1) according to any of claims 1 to 5, **characterised in that** a tactile pressure region (10) is formed on the drip plate (4), it being possible for tilting of the drip plate (4) with respect to the support structure (5) to be initiated by the user exerting tactile pressure in the tactile pressure region (10).

7. Beverage preparation means (1) according to claim 6, **characterised in that** the tactile pressure region (10) is arranged at the edge of the drip plate (4).

8. Beverage preparation means (1) according to either claim 6 or claim 7, **characterised in that** the tactile pressure region (10) is arranged so as to be opposite the front edge (11) of the drip plate (4).

9. Beverage preparation means (1) according to any of claims 6 to 8, **characterised in that** a clearance (9) is formed under the tactile pressure region (10) between the drip plate (4) and the support structure (5).

10. Beverage preparation means (1) according to any of claims 6 to 9, **characterised in that** the tactile pressure region (10) can be identified by a marker (12) in the drip plate (4).

11. Beverage preparation means (1) according to any of claims 1 to 10, **characterised in that** the drip plate (5) consists of dishwasher-safe plastics material.

12. Beverage preparation means (1) according to any of claims 1 to 10, **characterised in that** the drip plate (5) consists of metal.

## Revendications

1. Appareil de préparation de boissons (1) pour la préparation de différentes boissons, comprenant une zone de distribution (2) de face avant, dans laquelle débouche une sortie de boisson (3) et dans laquelle un plancher approprié pour arrêter un récipient à remplir avec la boisson est conçu comme une plaque d'égouttage (4) perméable au reste de la boisson ou à d'autres liquides, une structure de support (5) supportant la plaque d'égouttage (4) étant située au-dessous de la plaque d'égouttage (4), **caractérisée en ce que** la plaque d'égouttage (4) est conçue de manière à pouvoir basculer par rapport à la structure de support (5), la plaque d'égouttage (4) présentant au moins un élément protubérant pour fournir un point d'appui qui forme une bascule avec la structure de support (5) ou la structure de support (5) présente au moins un élément protubérant (8) pour fournir un point d'appui qui, conjointement avec la plaque d'égouttage (4), forme une bascule.

2. Appareil de préparation de boissons (1) selon la revendication 1, **caractérisé en ce que** la plaque d'égouttage (4) et la structure de support (5) pouvant basculer l'une contre l'autre autour d'un axe d'inclinaison (6) longeant la face avant.

3. Appareil de préparation de boissons (1) selon la revendication 1 ou la revendication 2, **caractérisé en ce que** le basculement de la plaque d'égouttage (4), par rapport à la structure de support (5), d'une position normale à une position inclinée, entraîne la formation d'une fente (7) de face avant entre la plaque d'égouttage (4) et la structure de support (5), (en position inclinée.

4. Appareil de préparation de boissons (1) selon la revendication 3, **caractérisé en ce que** la fente (7) formée en position inclinée permet à l'utilisateur d'enlever manuellement la plaque d'égouttage (4) de la structure de support (5).

5. Appareil de préparation de boissons (1) selon l'une des revendications 1 à 4, **caractérisé en ce qu'**un espace libre (9) est formé entre la plaque d'égouttement (4) et la structure de support (5), de sorte que la plaque d'égouttage (4) et la structure de support (5) forment une bascule.

6. Appareil de préparation de boissons (1) selon l'une des revendications 1 à 5, **caractérisé en ce qu'**une zone de bouton (10) est formée sur la plaque d'égouttage (4), l'utilisateur pouvant initier le basculement de la plaque d'égouttage (4) par rapport à la structure de support (5) par l'exercice d'une pression tactile dans la zone de bouton (10).

7. Appareil de préparation de boissons (1) selon la revendication 6, **caractérisé en ce que** la zone de bouton (10) est disposée sur le bord de la plaque d'égouttage (4).

8. Appareil de préparation de boissons (1) selon la revendication 6 ou la revendication 7, **caractérisé en ce que** la zone de bouton (10) est disposée à l'opposé du bord de face avant (11) de la plaque d'égouttage (4).

9. Appareil de préparation de boissons (1) selon l'une des revendications 6 à 8, **caractérisé en ce qu'**un espace libre (9) est formé entre la plaque d'égouttage (4) et la structure de support (5) sous la zone de bouton (10).

10. Appareil de préparation de boissons (1) selon l'une des revendications 6 à 9, **caractérisé en ce que** la zone de bouton (10) est identifiable par un marquage (12) dans la plaque d'égouttage (4).

11. Appareil de préparation de boissons (1) selon l'une des revendications 1 à 10, **caractérisé en ce que** la plaque d'égouttage (5) est en matière plastique allant au lave-vaisselle.

12. Appareil de préparation de boissons (1) selon l'une des revendications 1 à 10, **caractérisé en ce que** la plaque d'égouttage (5) est en métal.
